# EUROPÄISCHE PATENTSCHRIFT

(11) **EP 1 813 561 B1**
(45) Veröffentlichungstag und Bekanntmachung des Hinweises auf die Patenterteilung: **17.08.2011**
(21) Anmeldenummer: 07101332.0
(22) Anmeldetag: 29.01.2007
(51) Int. Cl.: B29C 63/02, B29C 63/00, B29C 63/04, B65H 19/12, B65H 39/16

(54) **Verfahren zum Oberflächenbeschichten von Profilsträngen mit Beschichtungsfolienstreifen und Vorrichtung dafür**
Method for coating surfaces of moulded strings with strips of surfacing film and device therefor
Procédé destiné au revêtement de surfaces de profilés dotés de bandes de feuilles de revêtement et son dispositif

(30) Priorität: 27.01.2006 DE 102006003887; 02.02.2006 DE 102006005118
(43) Veröffentlichungstag der Anmeldung: 01.08.2007
(73) Patentinhaber: Veka AG, 48324 Sendenhorst (DE)
(72) Erfinder: Ernemann, Peter, 48231, Warendorf (DE); Schmalz, Wolfgang, 59229, Ahlen (DE)
(74) Vertreter: Tarvenkorn, Oliver

(56) Entgegenhaltungen:
- WO-A-2005/037528
- WO-A1-2004/069705
- DE-A1- 4 232 697
- DE-A1-102004 025 520
- DE-A1-102006 005 188
- DE-U1- 8 802 692

## Beschreibung

Die Erfindung betrifft ein Verfahren zum Oberflächenbeschichten von Profilsträngen mit Beschichtungsfolienstreifen mit den Merkmalen des Oberbegriffs des Anspruchs 1.

Um bei Profilsträngen, insbesondere Kunststoffhohlprofilen für Fenster- oder Türen, Oberflächen schnell gestalten zu können, und zwar sowohl in Hinsicht auf die Oberflächenstruktur wie auch in Bezug auf die Farbe, werden Beschichtungsfolienstreifen aufgebracht, insbesondere aufgeklebt. Die Handhabung der einzelnen Beschichtungsfolienstreifen gestaltet sich aber insbesondere beim chargenweisen Oberflächenbeschichten als schwierig, wenn für verschiedene Profilstrangtypen und/oder für Profilstränge aus verschiedenen Kommissionen jeweils unterschiedliche Beschichtungsfolienstreifen bereitgestellt werden müssen, die in wenigstens drei Parametern variieren, nämlich hinsichtlich Breite, Farbe und Oberflächenstruktur, so dass eine außerordentlich große Vielzahl von Spulen mit Beschichtungsfolienstreifen bereit gehalten werden muss, um Aufträge mit allen angebotenen Optionen ausführen zu können.

Aus der DE 10 2004 025 520 A1 sind eine Beschichtungsvorrichtung und ein Verfahren zum Beschichten von Profilsträngen bekannt, welche wesentlich darauf abzielen, an komplexen Profilkonturen das fehlstellenfreie Anlegen der Folie zu ermöglichen. Die Lagerung der Folienspule erfolgt auf einem einfachen Folienbock oberhalb des Profilstrangs.

Um die Profilstränge einer Kommission zeitgerecht und auftragsgemäß mit der Folie zu beschichten, werden bei dem herkömmlichen Verfahren die Spulen mit den Beschichtungsfolienstreifen durch den Bediener aus einem Lager geholt und in der Nähe der Beschichtungseinrichtung bereitgestellt. Die Spulen werden dann bei Fertigungsbeginn in eine Abspulstation einhängt, die unmittelbar über der Beschichtungseinrichtung angeordnet ist. Das freie Ende des aufgespulten Beschichtungsfolienstreifens wird heruntergezogen und auf die zu beschichtende Oberfläche aufgelegt. Der Beschichtungsfolienstreifen wird durch Andruckrollen angepresst und fixiert.

Nachdem die erste Charge von Profilsträngen beschichtet ist, wird die Restspule mit dem Beschichtungsfolienstreifen abgenommen und die nächste Spule mit dem für den nächsten Beschichtungsvorgang vorgesehenen Folienstreifen in die Abspulstation eingelegt. Die Restspulen werden je nach Restlänge auf der Spule manuell zurück ins Lager geführt oder entsorgt.

Dieses Verfahren erfordert ein ständiges Ein- und Aussortieren der Spulen im Lager. Die Bereitstellung von Spulen nahe bei der Beschichtungseinrichtung erfordert größere Bereitstellungsflächen neben der Beschichtungseinrichtung bzw. engt den gegebenen Raum seitlich der Beschichtungseinrichtung so weit ein, dass die Arbeitssicherheit gefährdet sein kann.

Ein weiterer Nachteil besteht darin, dass die Spulen mit den Beschichtungsfolienstreifen ein hohes Gewicht haben, so dass die Handhabung der Spulen oberhalb der Beschichtungseinrichtung eine hohe körperliche Belastung der Bediener nach sich zieht.

In der WO 2004 / 069 705 A1 ist eine Vorrichtung offenbart, mit der mehrere verschiedene Abdeckfolien auf thermoplastische Kunststoffe aufgebracht werden können. Sie umfasst mehrere einzelne Zuführ- und Auftragseinrichtungen für die Abdeckfolien, wobei die mehreren Zuführ- und Auftragseinrichtungen auf einem gemeinsamen radförmigen, drehbaren Trägerelement angeordnet sind. Das Trägerelement wird soweit gedreht, dass diejenige Zuführ- und Auftragseinrichtung oberhalb des zu beschichtenden Werkstücks liegt, welche die gewünschte Abdeckfolie enthält. Die bekannte Vorrichtung ist aber dadurch, dass sie mehre in sich völlig eigenständig arbeitende Zuführ- und Auftragseinrichtungen enthält, sehr aufwändig hinsichtlich der Kosten und des Raumbedarfs. Die Bauart bedingt auch, dass kaum mehr als vier einzelne Abdeckfolien bereit gehalten werden können, denn andernfalls würde das radförmige Trägerelement viel zu groß. Während des Beschichtungsvorgangs muss das Trägerelement seine Position beibehalten. Es ist somit nicht möglich, zeitgleich an einer bestimmten Aufgabeposition neue Folien einzulegen.

Aufgabe der Erfindung ist es daher, ein Verfahren der eingangs genannten Art so zu verbessern, dass die Bereitstellung der für die jeweilige Charge benötigten Spulen mit den Beschichtungsfolienstreifen wie die Rückgabe der Restspulen übersichtlich, in einer Platz sparenden und ergonomischen Weise möglich ist.

Diese Aufgabe wird durch ein Verfahren mit den Merkmalen des Anspruchs 1 gelöst.

Durch die Verwendung einer drehbaren Bereitstellungsvorrichtung kann die Bereitstellung der Spulen von der Beschichtungseinrichtung weg verlagert werden. Es müssen keine Spulen mehr in der Nähe der Beschichtseinrichtung gelagert werden, wodurch die Arbeitssicherheit und Übersichtlichkeit des Arbeitsplatzes verbessert wird. Die körperliche Belastung des Bedieners wird dadurch reduziert, dass die Vorratshaltung der Spulen direkt auf der oberen Ebene erfolgt oder aber dass die Spulen durch sonstige Hilfsmittel wie Förderbänder, Handwagen etc. bis an den oberen Zugang der Bereitstellungsvorrichtung herangeführt werden können. Die Spulen müssen dann nur noch auf die Bereitstellungsplätze an der Bereitstellungsvorrichtung eingehängt werden.

Im Gegensatz zu linear wirkenden Fördereinrichtungen bietet die drehbare Ausbildung in verfahrensmäßiger Hinsicht den besonderen Vorteil, dass die Bereitstellungsvorrichtung als jederzeit optisch einsehbares Zwischenlager dient. Der Maschinenführer an der Beschichtungseinrichtung kann sich also im Voraus vergewissern, dass die von ihm in Kürze benötigen Beschichtungsfolienstreifen bereit gestellt sind.

Ein weiterer Vorteil besteht darin, dass ein gezielter Zugriff auf einzelne Bereitstellungsplätze unabhängig von der Aufgabereihenfolge an der als Bereitstellungslager und als Puffer wirkenden Bereitstellungsvorrichtung möglich ist.

Es ist auch nicht nötig, eine Reihenfolge bei der Bestückung einzuhalten. Die Bestückung kann vielmehr chaotisch an dem nächstliegenden freien Bereitstellungsplatz erfolgen. Der Zugriff ist einfach aufgrund der Einsehbarkeit und auch schnell, da selbst für das Heranführen des am weitesten von der Abspulstation entfernten Bereitstellungsplatzes maximal eine halbe Drehung der Bereitstellungsvorrichtung erforderlich ist.

In anlagentechnischer Hinsicht sind Antrieb und Steuerung des auf der Bereitstellungsvorrichtung errichteten Zwischenlagers sehr einfach möglich, beispielsweise über einen Schrittmotor. Anders als etwa bei einem Förderband sind keine Sensoren erforderlich, um die Lage der bereit gestellten Spulen nachverfolgen zu können.

Durch Drehen des Rotorelements können die bereitgestellten Spulen auf der unteren Ebene direkt bei der Beschichtungseinrichtung abgerufen und an die dort angeordnete Abspulstation übergeben werden. Dies geschieht insbesondere dadurch, dass die Bereitstellungsplätze an der Bereitstellungsvorrichtung eine Kreisbahn in einer vertikalen Ebene beschreiben, die bis in die Reichweite eines an der Beschichtungseinrichtung stehenden Bedieners geführt ist. Dieser kann die gewünschte Spule dort entnehmen und auf die Abspulstation der Beschichtungseinrichtung hängen. Noch erleichtert wird der Vorgang dadurch, dass die Bereitstellungsplätze mit den Spulen so positioniert werden, dass der Aufnahmezapfen, der einen Bereitstellungsplatz bildet, mit einem Aufnahmezapfen der Abspulstation in Flucht liegt und die Spule so lediglich von dem einen Aufnahmezapfen auf den anderen herübergezogen werden braucht. Hierdurch wird die körperliche Beanspruchung des bei der Beschichtungseinrichtung arbeitenden Bedieners stark reduziert. Bei unmittelbar voreinander platzierten Aufnahmezapfen wird auch vermieden, dass eine Spule dem Bediener entgleitet und herabfällt, so dass eine Gefahrenquelle für den Bediener und die Beschichtungseinrichtung beseitigt ist.

Zweckmäßigerweise besitzt die Abspulstation wenigstens zwei Aufnahmepositionen, die beispielsweise durch Aufnahmezapfen für den Spulenkörper gebildet sind, die vorzugsweise an miteinander verbundenen und als Einheit schwenkbaren Armen angeordnet sind. So kann jeweils einer der Aufnahmezapfen in eine Arbeitsposition gebracht werden, während ein anderer so gegenüber der Kreisbahn der Beschichtungsvorrichtung liegt, dass bereits eine neue Spule von der Bereitstellungsvorrichtung an die Abspulstation übergeben werden kann.

Um die benutzte Spule wieder zurück ins Lager zu führen, genügt dann ein einfaches Umschwenken der Aufnahmezapfen an der Abspulstation, um die Arbeits- und die Übergabeposition zu tauschen. Die vorher in Arbeitsposition befindliche Spule liegt nun gegenüber der Kreisbahn der Bereitstellungsplätze und kann an einen freien Bereitstellungsplatz übergeben werden. Durch erneutes Drehen der Bereitstellungsvorrichtung wird die benutzte Spule wieder auf die obere Bedienerebene gebracht, wo sie entnommen und zurück ins Lager geführt werden kann.

Zusätzlich ist es möglich, eine separate Rückführvorrichtung vorzusehen, um Spulen mit Restmengen von Beschichtungsfolienstreifen direkt der Entsorgung zuzuführen ohne sie in die Bereitstellungsvorrichtung zurück zu legen.

Außerdem ist es eine weitere Aufgabe der Erfindung, ein Beschichtungssystem für Profilstränge anzugeben, das zur Durchführung des Verfahrens geeignet ist.

Diese Aufgabe wird durch ein Beschichtungssystem mit den Merkmalen des Anspruchs 7 gelöst.

Ein erfindungsgemäßes Beschichtungssystem besitzt wenigstens ein radförmiges Rotorelement, das an einer horizontalen Drehachse schwenk- oder drehbar gelagert ist und das wenigstens zwei auf einer gemeinsamen Kreisbahn um die Drehachse bewegbare Bereitstellungsplätze für jeweils wenigstens eine Spule eines Beschichtungsfolienstreifens besitzt, welche Bereitstellungsplätze jeweils durch wenigstens einen, im wesentlichen horizontalen Aufnahmezapfen gebildet sind, auf welchen die wenigstens eine Spule aufsetzbar ist.

Durch das Rotorelement wird ein Magazin für Spulen geschaffen, das als Zwischenlager zwischen einer oberen und einer unteren Bedienerebene dient und mit dem zugleich der Transport von der einen Bedienerebene zur anderen durchführbar ist. Die Ausbildung als scheibenförmiges Rotorelement, das radförmig ausgebildet ist und eine horizontale Drehachse aufweist, dient auch der Übersichtlichkeit, denn die Spulen mit den Beschichtungsfolienstreifen hängen gut sichtbar außen an dem Rotorelement und können daher von dem Maschinenführer auf einer unteren Bedienerebene bei der Beschichtungseinrichtung leicht ausgewählt werden.

Möglich ist auch, die Übernahme und Rückgabe der Spulen von der bzw. an die Bereitstellungsvorrichtung automatisiert vornehmen zu lassen. Hierzu wird in der oberen Bedienerebene ein an der Spule vorhandener Code bei Aufgabe auf die Bereitstellungsvorrichtung erfasst. Die Daten werden zusammen mit Daten für den jeweiligen Bereitstellungsplatz an eine Rechnereinheit übergeben. Durch diese Daten können dann die jeweils für den nächsten Auftrag benötigten Spulen automatisch bis direkt an die Abspulstation gefördert werden. Die Übergabe von der Bereitstellungsvorrichtung auf die Abspulstation kann dann entweder manuell oder durch einfache Handhabungsmaschinen erfolgen.

Zur Codierung der Spulen sind insbesondere RFID-Etiketten geeignet, die am Spulenkörper angebracht sein können. Dies hat den Vorteil, dass der Code auch dann erhalten bleibt, wenn ein Beschichtungsfolienstreifen vollständig abgespult worden ist. Der leere Spulenkörper kann dann bei der Rückführung erfasst werden.

Ansonsten ist es auch möglich, Barcodes seitlich an dem aufgewickelten Folienstreifen anzubringen, die mit Laserscannern gelesen werden könne.

Die Erfindung wird nachfolgend mit Bezug auf die Zeichnungen näher erläutert. Die Figuren zeigen:
- Fig. 1: ein Beschichtungssystem in perspektivischer Ansicht,
- Fig. 2: einen Bereitstellungsplatz an einer Bereitstellungsvorrichtung in perspektivischer Ansicht,
- Fig. 3a, 3b: eine Wendevorrichtung in seitlicher Ansicht in verschiedenen Bewegungsstadien und
- Fig. 4: eine Bereitstellungsvorrichtung und eine Abspulstation in seitlicher Ansicht.

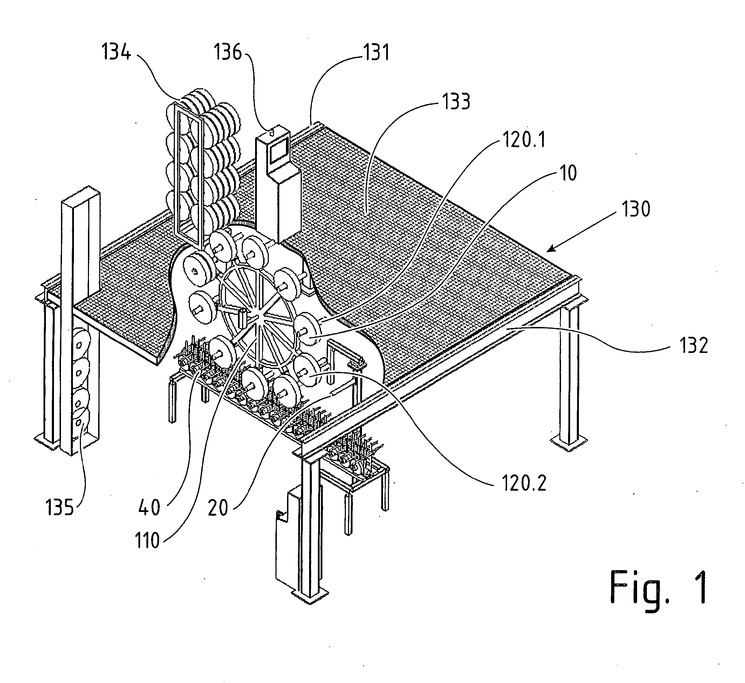

Fig. 1 zeigt ein komplettes Beschichtungssystem, das zunächst eine Beschichtungseinrichtung 40 und eine Abspulstation 20 umfasst. Die zu beschichtenden Profilstränge werden in der Beschichtungseinrichtung 40 entlang ihrer Längsachse gefördert. Zugleich wird ein Beschichtungsfolienstreifen von einer auf der Abspulstation 20 drehbar gelagerten Spule 10 abgespult und durch Andruckrollen der Beschichtungseinrichtung auf die Oberfläche des Profilstrangs gepresst.

Erfindungsgemäß ist eine Bereitstellungsvorrichtung 100 vorgesehen, die in ihrem Kern ein Rotorelement 110 mit mehreren am Außenumfang angeordneten Bereitstellungsplätzen 120.1, 120.2, ... 120.n aufweist. Das Rotorelement 110 ist an einer horizontalen Drehachse drehbar gelagert. Die Lagerung erfolgt oberhalb der Beschichtungseinrichtung 40, wobei ein leichter seitlicher Versatz zur Mittelachse der Beschichtungseinrichtung 40 vorgesehen ist, damit eine Positionierung der Bereitstellungsplätze 120 seitlich neben den Aufnahmezapfen der Abspulstation 20 möglich ist, welche sich direkt über der Beschichtungseinrichtung befindet.

Oberhalb der Beschichtungseinrichtung 40 ist eine obere Bedienerebene 130 angelegt, die im dargestellten Ausführungsbeispiel durch ein Podest 133 gebildet ist, welches auf zwei Traversen 131, 132 gelagert ist. Das Podest 133 kann beispielsweise durch einen Gitterrost-Boden gebildet sein, der in Fig. 1 nur ausschnittsweise dargestellt ist, um den Blick auf die untere Bedienerebene zu ermöglichen.

Das Rotorelement 110 ist radförmig ausgebildet, wobei es beispielsweise speichenförmig ausgebildet sein kann, wie in Fig. 1 dargestellt, oder als vollflächig geschlossene Scheibe.

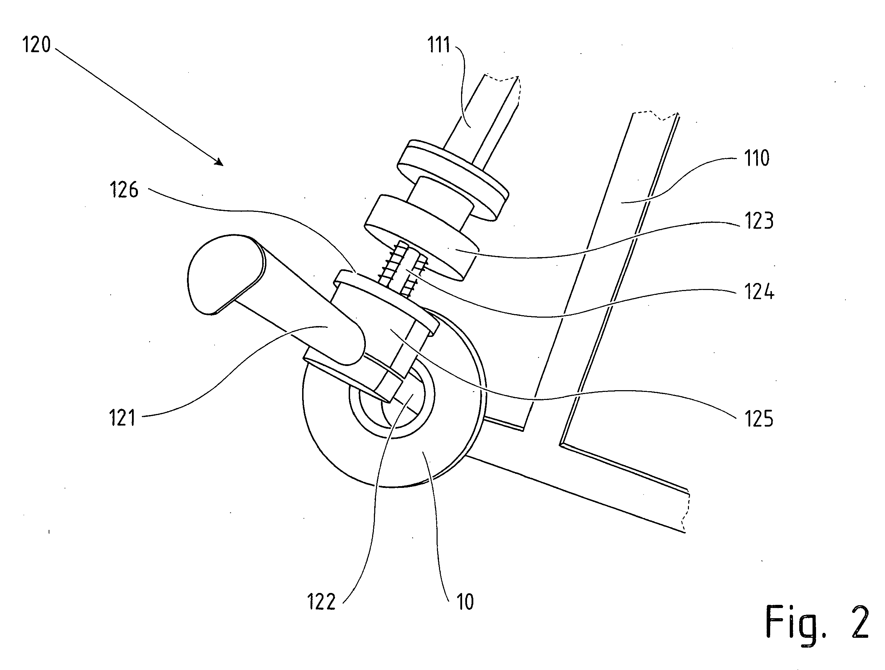

Im dargestellten Ausführungsbeispiel sind an jedem Bereitstellungsplatz 120.1, ... 120.n zwei Aufnahmezapfen 121, 122 angeordnet, wie insbesondere die Darstellung eines einzelnen Bereitstellungsplatzes in Fig. 2 zeigt. Damit kann die Aufnahmekapazität der Bereitstellungsvorrichtung 100 verdoppelt werden. Um die jeweils benötigte Spule 10 lagerrichtig an die Abspulstation 20 übergeben zu können, ist an wenigstens einer von den Bereitstellungsplätzen 120 anzufahrenden Position eine Wendevorrichtung vorgesehen. Die beiden Aufnahmezapfen 121, 122 sind an einem gemeinsamen Lagerelement 125 eingespannt, das über eine Arretierungsplatte 126, zwei Federbeine 124 und eine gemeinsame Drehachse 127 gegenüber einem Basiselement 123, das direkt mit einer Radialstrebe 111 des Rotorelements 110 verbunden ist, verschiebbar ist.

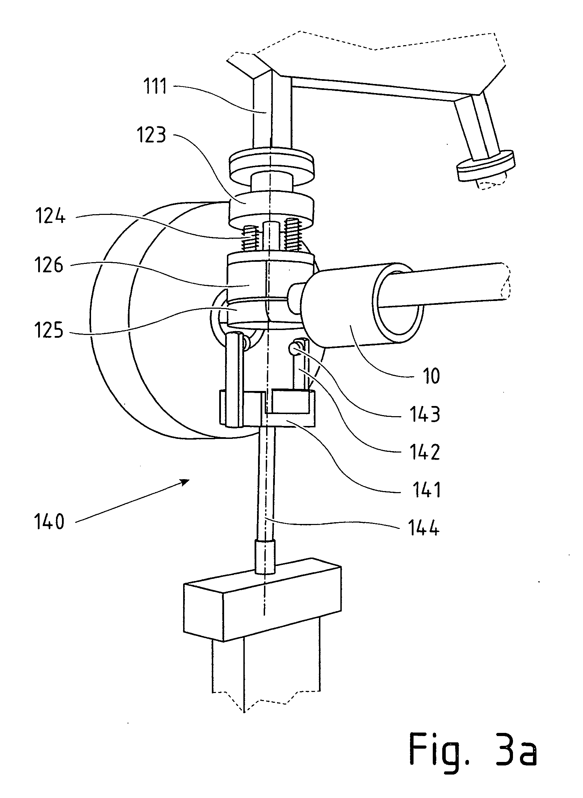

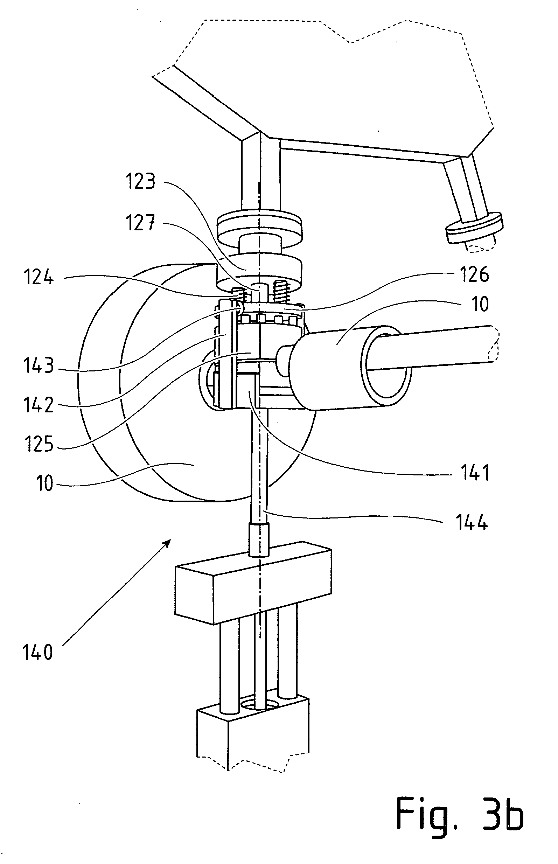

Über eine externe Wendevorrichtung 140, die in den Figuren 3a und 3b dargestellt ist, wird eine Drehverriegelung gelöst, so dass das Lagerelement 125 drehbar gegenüber dem Basiselement 123 wird. Lager- und Basiselement 125, 123 sind über eine zentrale Drehachse 127 verbunden. Dadurch kann das Lagerelement 125 mit seinen beiden Aufnahmezapfen 121, 122 verschwenkt werden. Durch eine Drehung um 180° tauschen die Aufnahmezapfen 121, 122 ihren Platz.

Figur 3a zeigt die Wendevorrichtung 140, die unterhalb des Rotorelements 110 angeordnet ist. Die Kraftrichtung des Federbeins 124 sowie die der Drehachse für das Lagerelement 125 verlaufen ebenfalls radial in Bezug auf den Mittelpunkt des Rotorelements 110. Hierdurch werden Kräfte, die durch den Ent- und Verriegelungsvorgang entstehen, auf die Drehachse des Rotorelements 110 abgeleitet, ohne dass zusätzliche Kippmomente wirken.

Über einen Pneumatikzylinder wird eine Kolbenstange nach oben geschoben, an deren Ende ein Entriegelungskopf montiert ist, der eine Basisplatte 141 mit zwei davon abstehenden Fingern 142 umfasst. Die Breite der Basisplatte 141 bzw. der Abstand zwischen den Fingern 142 ist so gewählt, dass das Lagerelement 125 umfasst werden kann. Am Ende der Finger 142 ist jeweils eine drehbare gelagerte Rolle 143 angeordnet.

Durch Verschiebung der Kolbenstange werden die Finger 142 mit ihren Rollen 143 unter denjenigen Teilbereich der Arretierungsplatte 126 geschoben, der über das Lagerelement 125 vorsteht. Die Arretierungsplatte 126 liegt zu diesem Zeitpunkt an dem Lagerelement 125 an, wobei Sie von dem Federbein 124 angedrückt wird. Zwischen der Arretierungsplatte 125 und der Oberseite des Lagerelements 125 wird ein Form- und/oder Reibschluss erzeugt, beispielsweise durch vorstehende Rastelemente an der Arretierungsplatte, die in entsprechende Aufnahmeausnehmungen im Lagerelement 125 eingerückt sind.

Mit dem weiteren Vorschub der Arretierungsplatte 126 bis in die in Fig. 3b gezeigte Position werden die Formschlusselemente ausgerückt, so dass das Lagerelement 125 mit den Aufnahmezapfen 121 frei um die Drehachse 127 drehbar ist.

Das Umschwenken des Lagerelements 125 wird durch Drehen der Kolbenstange mitsamt der Basisplatte 141 der Wendevorrichtung 140 bewirkt. Die Basisplatte 141 ist im Übergangsbereich zu den Fingern 142 so gestaltet, dass sie formschlüssig an dem Lagerelement 125 anliegt. Durch das Drehen der Basisplatte 141 wird somit auch das Lagerelement 125 samt den darin eingespannten Aufnahmezapfen 121, 122 verschwenkt. Die Rollen 143 oben an den Fingern 142 ermöglichen das Drehen der Wendevorrichtung, während die Finger 142 zugleich die Arretierungsplatte 126 in der angehobenen, entriegelten Position halten.

Abschließend wird der Entriegelungskopf der Wendevorrichtung wieder herab gelassen, so dass die Arretierungsplatte 126 infolge der Vorspannung der Druckfeder in den Federbeinen 124 wieder in ihre Ruheposition zurückfährt, wodurch zugleich die Rastverbindung zum Lagerelement 125 automatisch wieder hergestellt wird, um ein unbeabsichtigtes Verdrehen des Lagerelements 125 mit den daran angebrachten Aufnahmezapfen 121, 122 und den evtl. darauf gelagerten Spulen 10 zu verhindern.

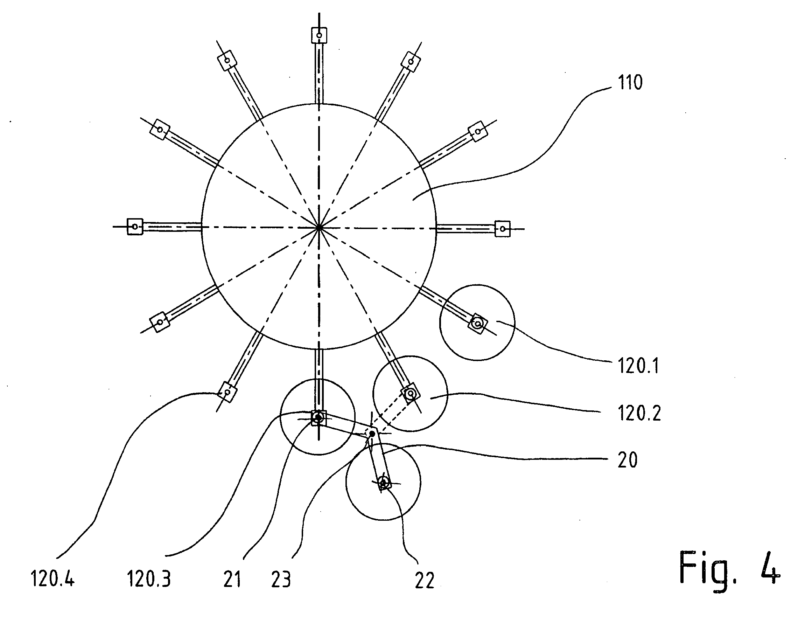

Figur 4 zeigt das Rotorelement 110 mit den Bereitstellungsplätzen 120.1,...120.4,.. in seitlicher Ansicht. Unterhalb ist eine Abspulstation 20 angeordnet, die im dargestellten Ausführungsbeispiel zwei Arme mit je einem Aufnahmezapfen 21, 22 für eine Spule 10 umfasst. Im Schnittpunkt der Arme ist die Vorrichtung an einer Achse 23 schwenkbar gelagert, so dass sie durch eine Schwenkbewegung von 120° in die in Figur 4 gestrichelt gezeichnete Stellung überführt werden kann.

An dem unteren Arm der Abspulstation 20 wird von der Spule 10 ein Folienstreifen 11 abgezogen. Zugleich liegt der andere Arm der Abspulstation 20 vor dem Bereitstellungsplatz 120.3. Muss nun die Beschichtungsfolie gewechselt werden, wird die als nächstes benötigte Spule über das Rotorelement 110 heran geführt, bis sie dem anderen Arm der Abspulstation 20 gegenüber liegt. Dort kann sie dann übernommen werden und liegt in Bereitschaft auf der Abspulstation während das Rotorelement 110 wieder frei beweglich ist und be- bzw. entladen werden kann. Somit wird eine doppelte Pufferung bei der Spulenzuführung bewirkt, die eine hohe Flexibilität und schnelle Reaktion ermöglicht.

Das Verfahren zum chargenweisen Oberflächenbeschichten von Profilsträngen mit Beschichtungsfolienstreifen wird nachfolgend noch einmal erläutert:

Auf der oberen Bedienerebene 130 werden Spulen 10 mit Beschichtungsfolienstreifen einem Lagergestell 134 entnommen und auf Aufnahmezapfen an den Bereitstellungsplätzen 120.1, ...,120.n am Rotorelement 110 gehängt.

Von der oberen Bedienerebene 130 aus werden die aus dem Produktionsprozess übrig gebliebenen Restspulen von dem Rotorelement 110 entnommen und entweder wieder ins Lagergestell einsortiert, sofern die verbleibende Restlänge des Beschichtungsfolienstreifens auf der Spule 10 noch ausreichend ist. Andernfalls werden die entnommenen Restspulen zur Entsorgung abgeführt. All dies kann geschehen, ohne Platz in der unterhalb gelegenen Produktionsebene mit der Beschichtungseinrichtung 40 zu beanspruchen bzw. den dort statt findenden Beschichtungsvorgang zu stören.

Die Spulen sind einzeln codiert, so dass in einer Rechnereinheit 136 die Lagerhaltung vollständig erfasst werden kann. Auswertungen über Bestände, notwendige Nachbestellungen oder dergleichen sind damit auf einfache Weise möglich.Durch visuelle Kontrolle oder über elektronische Identifizierungsmittel wie RFID-Tags wird die auf dem Rotorelement 110 vorrätig gehaltene Spule 10 mit dem an der Beschichtungseinrichtung 40 für einen folgenden Auftrag benötigten Beschichtungsfolienstreifen nach unten bewegt, bis der entsprechende Bereitstellungsplatz direkt über der Beschichtungseinrichtung positioniert ist, und zwar derart, dass der Aufnahmezapfen des Rotorelements, auf dem die Spule ruht, gegenüber einem der Zapfen der Abspulvorrichtung positioniert ist. Die gewünschte Spule wird sodann herüber gezogen. Die Abspulvorrichtung wird nun derart geschwenkt, dass die benötigte neue Folie in Arbeitsposition zum Abspulen bereit steht und dass zugleich ein weiterer Arm der Abspulvorrichtung einer Bereitstellungsposition auf dem Rotorelement gegenüber liegt, so dass die auf dem anderen Arm der Abspulvorrichtung vorhandenen Restspule an den Bereitstellungsplatz übergeben werden und über eine Drehung des Rotorelements auf die obere Bedienerebene zurückgeführt werden kann.

Die Beschichtungsfolie 11 wird von der Spule 10 in der Arbeitsposition abgezogen und in die Andruckrollen der Beschichtungseinrichtung 40 eingefädelt, um den Beschichtungsvorgang zu beginnen.

Zusätzliche Handhabungsvorrichtungen können vorgesehen sein, um die Übergabe der Spulen von einem Bereitstellungsplatz auf die Abspulstation bzw. umgekehrt automatisiert durchführen zu können. Gleiches gilt für die Aufgabe und Entnahme der Spulen in der oberen Bedienerebene.

## Patentansprüche

1. Verfahren zum chargenweisen Oberflächenbeschichten von Profilsträngen mit Beschichtungsfolienstreifen, mit wenigstens folgenden Verfahrensschritten:
a) Bereitstellen wenigstens eines ersten auf einer Spule (10) aufgewickelten Beschichtungsfolienstreifens auf einem ersten Bereitstellungsplatz (120)
b) Zuführen der Spule zu einer Abspulstation (20),
c) Sukzessives Bewegen einer ersten Charge von Profilsträngen auf einer Beschichtungseinrichtung (40) entlang ihrer Längsachse und Aufbringen des von der Abspulstation (20) herbeigeführten ersten Beschichtungsfolienstreifens an wenigstens einer nach außen weisenden Oberfläche der Profilstränge,
d) Bereitstellen wenigstens eines zweiten auf einer Spule (10) aufgewickelten Beschichtungsfolienstreifens auf einem zweiten Bereitstellungsplatz (120) und
e) Tauschen der Spulen (10) an der Abspulstation (20) und Beschichten einer zweiten Charge von Profilsträngen mit dem zweiten Beschichtungsfolienstreifen,
**dadurch gekennzeichnet, dass** die Spulen (10) mit den Beschichtungsfolienstreifen auf einer oberhalb der Beschichtungseinrichtung angeordneten Bedienerebene (130) auf Bereitstellungsplätze (120) einer drehbaren Bereitstellungsvorrichtung (100) aufgelegt bzw. von dort entnommen werden und dass der Bereitstellungsplatz (120.1, 120.2) mit der jeweils benötigten Spule (10) durch Drehen der Bereitstellungsvorrichtung (100) einzeln an die Abspulstation (20) heran geführt werden.

2. Verfahren nach Anspruch 1, **dadurch gekennzeichnet, dass** die Bereitstellungsplätze (120) eine Kreisbahn in einer vertikalen Ebene beschreiben.

3. Verfahren nach Anspruch 2, **dadurch gekennzeichnet, dass** die Kreisbahn bis in die Reichweite eines an der Beschichtungseinrichtung (40) stehenden Bedieners geführt ist.

4. Verfahren nach Anspruch 2 oder 3, **dadurch gekennzeichnet, dass** die Abspulstation (20) wenigstens zwei Spulenaufnahmen (121, 120) aufweist, von denen eine der Kreisbahn der Bereitstellungsplätze (120.1, 120.2, ... ,120.n) gegenüberliegend in einer Übernahmeposition positioniert wird, während eine andere Spulenaufnahme (121) in einer Arbeitsposition zum Abspulen des Beschichtungsfolienstreifens positioniert wird.

5. Verfahren nach Anspruch 4, **dadurch gekennzeichnet, dass** die Übernahme- und die Arbeitsposition durch eine Schwenk- oder Drehbewegung der Spulenaufnahmen (121, 122) getauscht werden.

6. Verfahren nach einem der Ansprüche 1 bis 5, **dadurch gekennzeichnet, dass** die Spulen (10) mit einem Code versehen werden, der in der oberen Bedienerebene (130) mit einem Lesegerät erfasst wird und zusammen mit Daten zur Identifizierung des Bereitstellungsplatzes (120.1, 120.2, ... ,120.n) der jeweiligen Spule (10) an eine Rechnereinheit (136) übergeben werden.

7. Beschichtungssystem für Profilstränge, mit wenigstens
- einer Beschichtungseinrichtung (40),
- einer oberhalb der Beschichtungseinrichtung (40) angeordneten Abspulstation (20) mit wenigstens einem Aufnahmezapfen (212, 22) für eine Spule (10) eines Beschichtungsfolienstreifens, und
- einer Bereitstellungsvorrichtung (100) für Spulen (10), mit wenigstens einem radförmigen Rotorelement (110), das an einer horizontalen Drehachse schwenk- oder drehbar gelagert ist und das wenigstens zwei auf einer gemeinsamen Kreisbahn um die Drehachse bewegbare Bereitstellungsplätze (120.1, 120.2, ... , 120.n) für jeweils wenigstens eine Spule (10) eines Beschichtungsfolienstreifens (11) besitzt, welche Bereitstellungsplätze (120) jeweils durch wenigstens einen, im wesentlichen horizontalen Aufnahmezapfen (121, 122) gebildet sind, auf welchen die wenigstens eine Spule (10) aufsetzbar ist.

8. Beschichtungssystem nach Anspruch 7, **dadurch gekennzeichnet, dass** das Rotorelement (110) mit Radialstreben (111) ausgebildet ist.

9. Beschichtungssystem nach Anspruch 8, **dadurch gekennzeichnet, dass** an einem Bereitstellungsplatz (120) zwei miteinander fluchtende und mittels einer Wendevorrichtung (140) um mindestens 180° drehbare Aufnahmezapfen (121, 122) angeordnet sind, die sich beidseits vom Rotorelement (110) nach außen erstrecken.

10. Beschichtungssystem nach Anspruch 9, **dadurch gekennzeichnet, dass** die Drehachse der Wendevorrichtung radial in Bezug auf das Rotorelement (110) angeordnet ist.

11. Beschichtungssystem nach einem der Ansprüche 7 bis 10, **dadurch gekennzeichnet, dass** die Bereitstellungsvorrichtung (100) auf einem oberhalb der Beschichtungseinrichtung angeordneten Podest (131, 132, 133) gelagert ist, von dem aus wenigstens ein Bereitstellungsplatz (120.1, 120.2, ... ,120.n) wenigstens zeitweise für einen Bediener zugänglich ist.

12. Beschichtungssystem nach einem der Ansprüche 7 bis 11, **dadurch gekennzeichnet, dass** die Abspulstation (20) wenigstens zwei Aufnahmezapfen (21, 22) aufweist, welche an zwei miteinander verbundenen Armen befestigt sind, die als Einheit an einer Achse (23) schwenkbar gelagert und derart angeordnet sind, dass wenigstens einer der Aufnahmezapfen (21) in einer Übernahmeposition gegenüber der Kreisbahn der Bereitstellungsplätze (120.1, 120.2, ... ,120.n) positionierbar ist, während sich ein anderer Aufnahmezapfen (22) in einer Arbeitsposition zum Abspulen des Beschichtungsfolienstreifens (11) befindet.

## Claims

1. Method for batch surface-coating of profile extrusions with coating film strips, with at least the following method steps:
a) provision of at least one first coating film strip wound on a spool (10) at a first provision site (120),
b) passage of the spool to an unwinding station (20),
c) successive movement of a first batch of profile extrusions along its longitudinal axis to a coating device (40) and application of the first coating film strip guided by the unwinding station (20) to at least one exterior surface of the profile extrusion,
d) provision of at least one second coating film strip wound on a spool (10) at a second provision site (120), and
e) exchange of the spools (10) at the unwinding station (20) and coating of a second batch of profile extrusions with the second coating film strip,
**characterised in that** the spools (10) with the coating film strips are placed on or removed from a user plane (130) arranged above the coating device at the provision sites (120) of a rotatable provision device (100) and that the provision site (120.1, 120.2) with the respective required spool (10) is guided individually at the unwinding station (20) by rotation of the provision device (100).

2. Method according to claim 1, **characterised in that** the provision sites (120) describe a circular orbit in a vertical plane.

3. Method according to claim 2, **characterised in that** the circular orbit is guided to within the reach of an operator standing at the coating device (40).

4. Method according to claim 2 or 3, **characterised in that** the unwinding station (20) comprises at least two spool holders (121, 120), one of which is positioned opposite the circular orbit of the provision sites (120.1, 120.2, ..., 120.n) in a receiving position while another spool holder (121) is positioned in a working position for unwinding the coating film strip.

5. Method according to claim 4, **characterised in that** the receiving and working positions are changed by a swivel or rotary movement of the spool holders (121, 122).

6. Method according to any of claims 1 to 5, **characterised in that** the spools (10) carry a code which is detected by a reader in the upper user plane (130) and transmitted to a computer unit (136) together with data to identify the provision site (120.1, 120.2, ..., 120.n) of the respective spool.

7. Coating system for profile extrusions, with at least
- a coating device (40),
- an unwinding station (20) arranged above the coating device (40) with at least one holder peg (212, 22) for a spool (10) of a coating film strip, and
- a provision device (100) for spools (10), with at least one wheel-like rotor element (110) which is mounted swivellable or rotatable around a horizontal rotation axis and has at least two provision sites (120.1, 120.2, ..., 120.n) mobile on a common circular orbit around the rotation axis, each for at least one spool (10) of a coating film strip (11), which provision sites (120) are each formed by at least one substantially horizontal holder peg (121, 122) on which can be placed at least one spool (10).

8. Coating system according to claim 7, **characterised in that** the rotor element (110) is formed with radial webs (111).

9. Coating system according to claim 8, **characterised in that** arranged at a provision site (120) are two mutually aligned holder pegs (121, 122) which can be rotated through at least 180° by means of a turning device (140) and which extend outwards on both sides of the rotor element (110).

10. Coating system according to claim 9, **characterised in that** the rotation axis of the turning device is arranged radially in relation to the rotor element (110).

11. Coating system according to any of claims 7 to 10, **characterised in that** the provision device (100) is mounted on a platform (131, 132, 133) arranged above the coating device, from which at least one provision site (120.1, 120.2, ..., 120.n) is accessible to an operator for at least part of the time.

12. Coating system according to any of claims 7 to 11, **characterised in that** the unwinding station (20) comprises at least two holder pegs (21, 22) attached to two mutually connected arms that are mounted swivellably as a unit on an axis (23) and arranged such that at least one of the holder pegs (21) can be positioned in a receiving position opposite the circular orbit of the provision sites (120.1, 120.2, ..., 120.n) while another holder peg (22) is in a working position for unwinding the coating film strip (11).

## Revendications

1. Procédé pour revêtir de manière discontinue la surface de profilés avec des bandes de feuilles de revêtement, comprenant au moins les étapes de procédé suivantes :
a) mise à disposition d'au moins une première bande de feuille de revêtement enroulée sur une bobine (10) sur un premier emplacement de mise à disposition (120),
b) amenée de la bobine à un poste de déroulage (20),
c) déplacement successif d'une première charge de profilés sur un dispositif de revêtement (40) le long de son axe longitudinal et application de la première bande de feuille de revêtement entraînée par le poste de déroulage (20) sur au moins une surface tournée vers l'extérieur des profilés,
d) mise à disposition d'au moins une seconde bande de feuille de revêtement enroulée sur une bobine (10) sur un second emplacement de mise à disposition (120) et
e) échange des bobines (10) sur le poste de déroulage (20) et revêtement d'une seconde charge de profilés avec la seconde bande de feuille de revêtement,
**caractérisé en ce que** les bobines (10) avec les bandes de feuilles de revêtement sont posées sur un plan de l'opérateur (130) disposé au-dessus du dispositif de revêtement sur des emplacements de mise à disposition (120) d'un dispositif de mise à disposition rotatif (100) ou y sont reprises et **en ce que** l'emplacement de mise à disposition (120.1, 120.2) avec la bobine (10) nécessaire respectivement est amené individuellement près du poste de déroulage (20) par rotation du dispositif de mise à disposition (100).

2. Procédé selon la revendication 1, **caractérisé en ce que** les emplacements de mise à disposition (120) décrivent une trajectoire circulaire dans un plan vertical.

3. Procédé selon la revendication 2, **caractérisé en ce que** la trajectoire circulaire est guidée jusque dans le rayon d'action d'un opérateur se trouvant devant le dispositif de revêtement (40).

4. Procédé selon la revendication 2 ou 3, **caractérisé en ce que** le poste de déroulage (20) présente au moins deux logements de bobine (121, 120), dont un est positionné à l'opposé de la trajectoire circulaire des emplacements de mise à disposition (120.1, 120.2, ..., 120.n) dans une position de reprise, alors qu'un autre logement de bobine (121) est positionné dans une position de travail pour le déroulage de la bande de feuille de revêtement.

5. Procédé selon la revendication 4, **caractérisé en ce que** les positions de reprise et de travail sont échangées par un mouvement pivotant ou rotatif des logements de bobine (121, 122).

6. Procédé selon l'une quelconque des revendications 1 à 5, **caractérisé en ce que** les bobines (10) sont pourvues d'un code qui est détecté par un lecteur dans le plan de l'opérateur supérieur (130) et sont transmises conjointement avec des données pour l'identification de l'emplacement de mise à disposition (120.1, 120.2, ..., 120.n) de la bobine respective (10) à une unité informatique (136).

7. Système de revêtement pour des profilés, comprenant au moins
- un dispositif de revêtement (40),
- un poste de déroulage (20) disposé au-dessus du dispositif de revêtement (40) avec au moins un nez de centrage (212, 22) pour une bobine (10) d'une bande de feuille de revêtement, et
- un dispositif de mise à disposition (100) pour des bobines (10), avec au moins un élément de rotor (110) en forme de roue qui est logé de manière à pouvoir pivoter ou tourner sur un axe de rotation horizontal et qui possède au moins deux emplacements de mise à disposition (120.1, 120.2, ..., 120.n) mobiles sur une trajectoire circulaire commune autour de l'axe de rotation pour respectivement au moins une bobine (10) d'une bande de feuille de revêtement (11), lesquels emplacements de mise à disposition (120) sont formés respectivement par au moins un nez de centrage (121, 122) sensiblement horizontal, sur lequel peut être placée au moins une bobine (10).

8. Système de revêtement selon la revendication 7, **caractérisé en ce que** l'élément de rotor (110) est réalisé avec des entretoises radiales (111).

9. Système de revêtement selon la revendication 8, **caractérisé en ce que** deux nez de centrage (121, 122) s'alignant l'un avec l'autre et pouvant tourner d'au moins 180° à l'aide d'un dispositif de renversement (140) sont disposés sur un emplacement de mise à disposition (120), lesquels nez s'étendent de part et d'autre de l'élément de rotor (110) vers l'extérieur.

10. Système de revêtement selon la revendication 9, **caractérisé en ce que** l'axe de rotation du dispositif de renversement est disposé de manière radiale par rapport à l'élément de rotor (110).

11. Système de revêtement selon l'une quelconque des revendications 7 à 10, **caractérisé en ce que** le dispositif de mise à disposition (100) est logé sur un socle (131, 132, 133) disposé au-dessus du dispositif de revêtement, duquel un opérateur peut accéder au moins temporairement à au moins un emplacement de mise à disposition (120.1, 120.2, ..., 120.n).

12. Système de revêtement selon l'une quelconque des revendications 7 à 11, **caractérisé en ce que** le poste de déroulage (20) présente au moins deux nez de centrage (21, 22) fixés sur deux bras qui sont reliés l'un à l'autre, qui sont logés comme une unité de manière à pouvoir pivoter sur un axe (23) et sont disposés de telle manière qu'au moins l'un des nez de centrage (21) puisse être positionné dans une position de reprise par rapport à la trajectoire circulaire des emplacements de mise à disposition (120.1, 120.2, ..., 120.n), alors qu'un autre nez de centrage (22) se trouve dans une position de travail pour le déroulage de la bande de feuille de revêtement (11).
